# EUROPEAN PATENT APPLICATION

(11) **EP 1 873 927 A1**
(43) Date of publication of application: **02.01.2008**
(21) Application number: 07106758.1
(22) Date of filing: 23.04.2007
(51) Int. Cl.: H04B 7/005

(54) **Transmission power control apparatus and control method thereof**

(30) Priority: 30.06.2006 JP 2006180608
(71) Applicant: Fujitsu Ltd., Kawasaki-shi, Kanagawa 211-8588 (JP)
(72) Inventor: SAKURAI, Jun c/o FUJITSU LIMITED, Kawasaki-shi, Kanagawa 211-8588 (JP); HOZUMI, Kanji c/o Fujitsu Limited, Kawasaki-shi Kanagawa 211-8588 (JP)
(74) Representative: Fenlon, Christine Lesley

(57) **Abstract**

When a mobile station controls the transmission power of the uplink using transmission power control information that is sent from a plurality of base stations with which the mobile station is communicating, a radio-state-monitoring unit (68₁ to 68_{N}) monitors the radio states between each base station and the mobile station, then based on the radio state, a power-control-algorithm-instruction unit (69) instructs a transmission power control unit (70) which of a plurality of power-control algorithms should be executed to control the power, and a transmission power control unit stores the plurality of power-control algorithms for control the uplink transmission power using TPC information and controls the uplink transmission power of the mobile station based on the instructed power-control algorithm.

## Description

### BACGKGROUND OF THE INVENTION

The present invention relates to a transmission power control apparatus and control method thereof, and more particularly to a transmission power control apparatus and control method thereof during a soft handover when a radio mobile station is simultaneously connected to a plurality of base stations.

### • W-CDMA

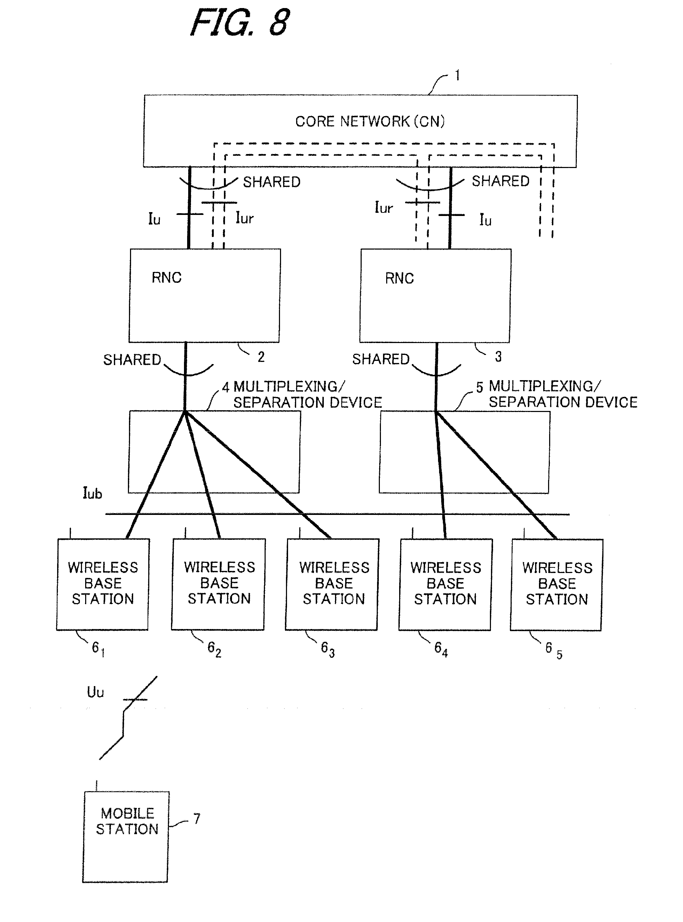

A W-CDMA mobile communication system is a radio communication system in which a plural i ty of users share a line, and as shown in FIG. 8, comprises: a core network 1; radio network control apparatus (RNC: Radio Network Controllers) 2, 3; multiplexing/separation apparatus 4, 5; radio base stations 6₁ to 6₅, and a mobile station 7.
The core network 1 is a network for performing routing in a mobile communication system, and for example, a core network can include an ATM-switching network, packet- switching network, router network, or the like. The core network 1 is also connected to another public network (PSTN), which makes it possible for a mobile station 7 to communicate with a fixed telephone, etc.

The radio network controllers (RNC) 2, 3 are positioned as the hosts of the radio base stations 6₁ to 6₅, and have a function for performing control (e.g. management of the radio resources that are used as the like) of these radio base stations 6₁ to 6₅,
The multiplexing/separation apparatus 4, 5 are located between the RNC and radio base stations, and they perform control for separating signals received from the RNC 2, 3 into signals for each of the radio base stations and transmits those signals to the radio base stations, as well as multiplexes signals from each of the radio base stations and gives them to the RNC.
The radio resources of the radio base stations 6₁ to 6₃ are managed by the RNC 2, and the radio resources of the radio base stations 6₄, 6₅ are managed by the RNC 3, and these radio base stations 6₁ to 6₅ perform radio communication with a mobile station 7. When a mobile station 7 is located within the radio range of a radio base station 6, a radio line is established between the mobile station 7 and that radio base station 6, and that mobile station 7 performs communication with another communication apparatus via the core network 1.

### • HSDPA

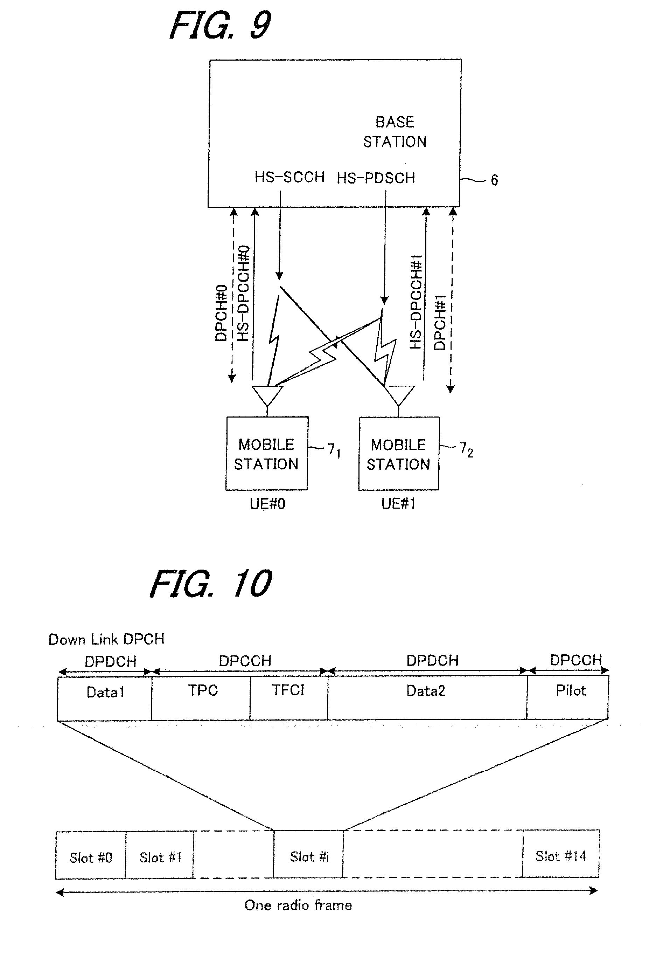

A typical mobile communication system is explained above, however, as a technique for making it possible to transmit data at high speed in the down direction, there is the HSDPA (High Speed Downlink Packet Access) method. HSDPA employs an adaptive modulation and coding (AMC) method, for example, it adaptively switches between the QPSK modulation scheme and 16 QAM scheme according to the radio environment between the radio base station and mobile station. Also, HSDPA employs a H-ARQ (Hybrid Automatic Repeat request) method.
As shown in FIG. 9, the radio channels used for HSDPA include; (1) HS-SCCH (High Speed-Shared Control Channel), (2) HS-PDSCH (High Speed-Physical Downlink Shared Channel), and (3) HS-DPCCH (High Speed-Dedicated Physical Control Channel). HS-SCCH and HS-PDSCH are both shared channels in the down direction (in other words, the downlink direction from a radio base station to a mobile station), where the HS-SCCH is a control channel that transmits various parameters for data transmitted by the HS-PDSCH. In other words, the HS-SCCH is a channel that notifies that data is transmitted via the HS-PDSCH. Parameters include; (1) destination information that indicates to which mobile station data is to be transmitted, (2) transmission bit rate information, (3) modulation information that indicates which modulation method is used for transmitting data, and (4) information such as the number of spreading codes assigned (number of codes).
The HS-DPCCH is a dedicated control channel in the up direction, and is used when transmitting a CQI (Channel Quality Indicator) to the radio base station, which indicates whether or not there was error in the data received via the HS-PDSCH, or in other words, indicates the reception result (ACK signal, NACK signal) or the quality of a signal received from the radio base station. The radio base station performs automatic retransmission control according to the H-ARQ method mentioned above based on the reception result, and executes adaptive modulation and coding according to the received CQI.

### • Power Control of a Signal Transmitted by an Up DPCH

In WCDMA communication, the mobile station performs transmission power control of data that is transmitted to a base station by an uplink DPCH according to TPC (Transmission power control) information that is sent from the base station by a downlink DPCH (Dedicated Physical Channel). FIG. 10 is a drawing explaining the slot format of a downlink DPCH. One frame is made up of fifteen slots #0 to #14, and is constructed so that it sends a first data section Data1, TPC information, TFCI information, a second data section Data2 and a PILOT for each slot by time-shared multiplexing.

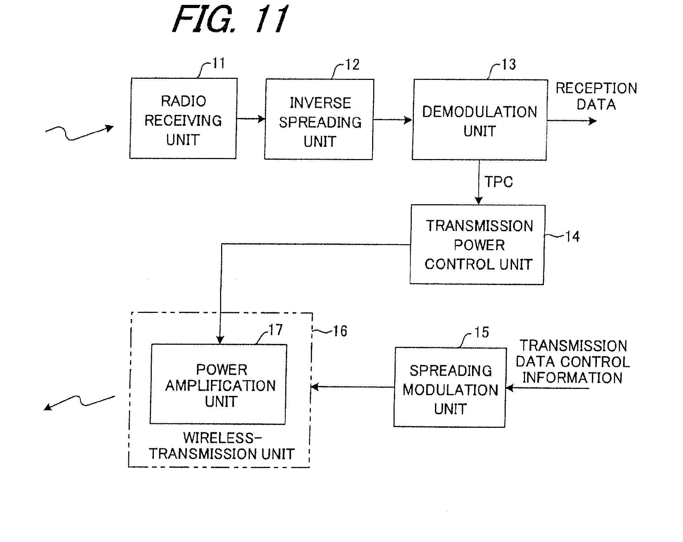

FIG. 11 is a drawing explaining uplink transmission power control of a mobile station. The base station (not shown in the figure) measures the SIR (Signal to Interference Ratio) of a signal received from a mobile station, then creates TPC information so that that SIR becomes equal to a target SIR, and sends that TPC information to the mobile station by a downlink DPCH (see FIG. 10). The radio-reception unit 11 of the mobile station receives the radio signal from the base station and performs down conversion of the frequency of the radio signal to a baseband signal, an inverse spreading unit 12 multiplies the baseband signal by inverse spreading code to perform inverse spreading, and a demodulation unit 13 performs demodulation processing on the inverse spread signal to demodulate the data and control information that were transmitted by way of the downlink DPCH, and inputs the TPC information to a transmission power control unit 14. A spreading-modulation unit 15 multiplies the transmission data and control information by spreading code to perform spreading, and a radio-transmission unit 16 performs up conversion of the frequency of the baseband signal to a radio frequency, and then amplifies that radio signal by a power amplifier 17 and transmits that signal to the base station from an antenna. The transmission power control unit 14 increments or decrements the gain of the power amplifier 17 by a specified amount based on the aforementioned TPC information that is sent from the base station.

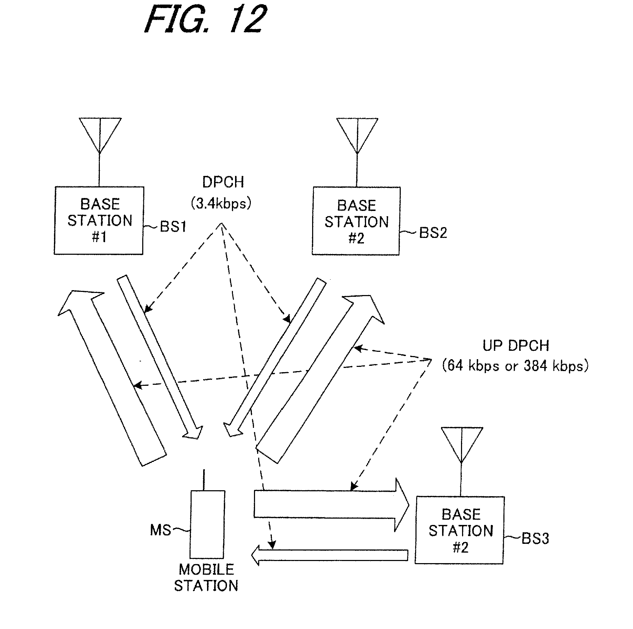

The power control of an up DPCH in a typical mobile system was described above, however, when performing HSDPA communication as well, the mobile station similarly uses TPC information that was sent from the base station to perform transmission power control of the uplink DPCH. In HSDPA communication, the transmission rate of the downlink DPCH is 3.4 kbps, and the transmission rate of uplink DPCH is 64 kbps or 384 kbps, which is unbalanced. Therefore, the transmission power of the TPC bit that is sent by the downlink DPCH is insufficient, so the transmission power control of the uplink DPCH becomes unstable, which causes the up transmission rate to decrease and the radio link to become out of sync, and thus communication is cut off.
Particularly, transmission power control during soft handover when a radio mobile station is simultaneously connected to a plurality of base stations by way of a radio link becomes onstab:le. FIG. 12 is a drawing explaining the state in which a mobile station performs communication with three base stations BS1 to BS3 simultaneously during handover, where the transmission rate in the downlink DPCH from each base station BS1 to BS3 is 3.4 kbps, and the transmission rate in the uplink DPCH is 64 kbps or 384 kbps.

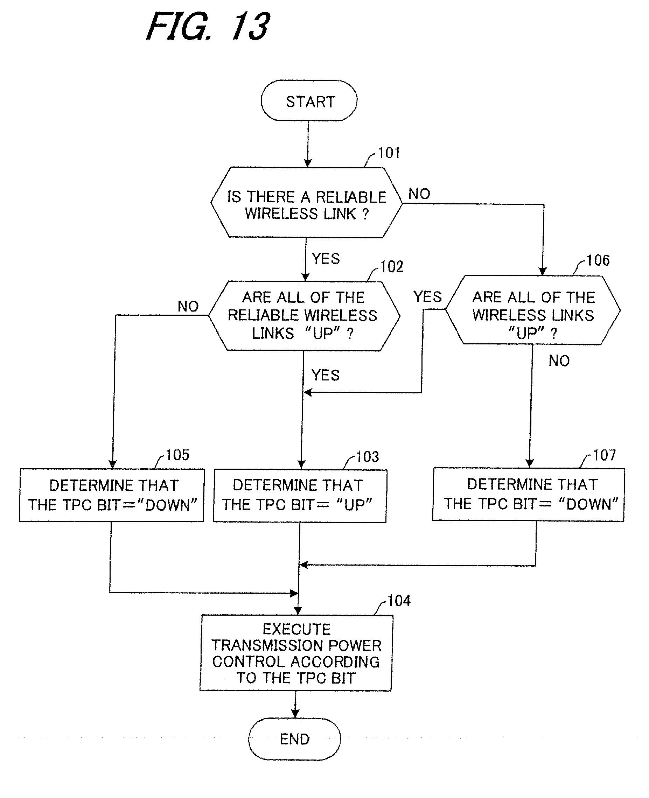

FIG. 13 is a flowchart showing the process of transmission power control during soft handover.
The mobile station MS performs RAKE combining of the TPC information for each radio link from each base station up to the mobile station, and demodulates the TPC information using the combination result. At the same time, the mobile station MS measures the reception level or reception SIR for each radio link, and based on the measurement results, checks whether a reliable radio link exists (step 101). When a reliable radio link exists, the mobile station MS checks whether all of the TPC information of that reliable radio link is 'UP' (step 102), and when all of the TPC information indicates 'UP' it determines that the TPC information is 'UP' (step 103), increments the transmission power of the uplink DPCH by specified amount (step 104).
On the other hand, in step 102, when even one item of TPC information of the reliable radio link is 'DOWN', the mobile station MS determines the TPC information is 'DOWN' (step 105), and decrements the transmission power of the uplink DPCH by a specified amount (step 104).
On the other hand, in step 101, when a reliable radio link does not exist, the mobile station MS checks whether all of the TPC information of the radio link indicates 'UP' (step 106), and when all of the TPC information indicates 'UP', it determines that the TPC information is 'UP' (step 103), and increments the transmission power of the uplink DPCH by a specified amount (step 104). However, in step 106, when even one item of TPC information of the radio fink indicates 'DOWN', the mobile station MS determines that the TPC information is 'DOWN' (step 107), and decrements the transmission power of the uplink DPCH by a specified amount (step 104).

With the transmission power control method shown in FIG. 13, there is a strong tendency for the transmission power to drop, and there is a problem in that the transmission power may drop below the desired transmission power. As was described above, the transmission power of the TPC bit that is sent by the downlink DPCH is insufficient, which may cause an unreliable radio link to exist in step 101. In this case, even if one item of TPC information of the radio link indicates 'DOWN', the transmission power of the uplink DPCH is decremented by a specified amount, so there is a strong tendency for the transmission power to drop, which may cause the transmission power to drop below the desired transmission power, and thus the up transmission rate decreases and the radio link becomes out of sync, and communication is cut off.
As was described above, when performing communication with a plurality of base stations during handover, a method for controlling the transmission power that is capable of stable transmission power control even if there is no stability in the radio link becomes necessary. As was explained in FIG. 11, the base station measures the SIR of a signal received from a mobile station, and creates TPC information that instructs the mobile station to increase or decrease the transmission power so that that SIR becomes equal to a target SIR, and sends that TPC information to the mobile station by the downlink DPCH. There is a technique for correcting the target SIR according to the error rate of reception data (JP2002-16545A) and a technique for creating TPC information (W02003/037023). However, no techniques have been proposed for performing stable transmission power control using received TPC information, even if there is no stability in the radio link when performing communication with a plurality of base stations.

### SUMMARY OF THE INVENTION

It is desirable to make it possible to perform stable transmission power control when a mobile station communicates with a plurality of base stations, even if there is no stability in the radio link.
It is desirable to prevent communication from being cut off when a mobile station communicates with a plurality of base stations, even if there is no stability in the radio link by keeping the transmission power of the mobile station somewhat large.

An embodiment of a first aspect of the present invention is a transmission power control method for a mobile station that controls the transmission power of the uplink using transmission power control information that is sent from a plurality of base stations with which the mobile station is communicating, comprising: a first step of storing a plurality of power-control algorithms for controlling the uplink transmission power using the transmission power control information; a second step of monitoring radio state between each base station and the mobile station; and a third step of controlling the uplink transmission power of the mobile station based on one of the plurality of power-control algorithms according to the radio state.
In the transmission power control method described above, the first step may comprise a step of creating and storing the power-control algorithms so that they correspond to: a first state in which there is transmission power control information having high reliability; a second state in which there is no transmission power control information having high reliability, but there is transmission power control information having low reliability; and a third state in which there is no transmission power control information having any reliability, respectively; the second step may comprise a step of checking the degree of reliability of the transmission power control information for each base station based on the radio state, and setting the current state to one of the first thru third states based on the reliability of the transmission power control information for each base station; and the third step may comprise a step of controlling the uplink transmission power of the mobile station using a power-control algorithm according to the set state.
Moreover, the second step of the transmission power control method described above may comprise: a step of measuring the reception SIR of a base station using a signal received from that base station; a step of determining that reliability of the transmission power control information is high when the reception SIR is greater than a first threshold value, determining that reliability of the transmission power control information is low when the reception SIR is greater than a second threshold value but less than the first threshold value, and determining that the transmission power control information has no reliability when the reception SIR is less than the second threshold value; and a step of setting the current state to one of the first thru third states based on the reliability of the transmission power control information for each base station.
In the transmission power control method described above, (1) the power-control algorithm that corresponds to said first state may comprise: a step of checking whether all of the transmission power control information having high reliability specifies 'power UP'; and a step of increasing the transmission power by a specified amount when all of the transmission power control information specifies 'power UP', and decreasing the transmission power by a specified amount even though only one item of the transmission power control information specifies 'power DOWN'; (2) the power-control algorithm that corresponds to the second state may comprise: a step of determining the base station having the largest reception SIR; and a step of increasing the transmission power by a specified amount when the transmission power control information that is sent from that base station specifies 'power UP', and decreasing the transmission power by a specified amount when that transmission power control information specifies 'power DOWN'; and (3) the power-control algorithm that corresponds to the third state may comprise: a step of performing RAKE combining of signals received from all base stations, and demodulating the transmission power control information based on the RAKE combination result; and a step of increasing the transmission power by a specified amount when that demodulated transmission power control information specifies 'power UP', and decreasing the transmission power by a specified amount when that transmission power control information specifies 'power DOWN'.

An embodiment of a second aspect of the present invention is a transmission power control apparatus that makes possible the transmission power control method embodying the first aspect of the invention, comprising: a radio-state-monitoring unit that monitors the radio states between each base station and the mobile station; a transmission power control unit that stores a plurality of power-control algorithms for controlling uplink transmission power using the transmission power control information, and controls the uplink transmission power of the mobile station based on one of the plurality of power-control algorithms; and a power-control-algorithm-instruction unit that, based on the radio state, instructs the transmission power control unit which power-control algorithm should be used to execute transmission power control.
In the transmission power control apparatus described above, the transmission power control unit may store power-control algorithms that correspond to a first state in which there is transmission power control information having high reliability; a second state in which there is no transmission power control information having high reliability, but there is transmission power control information having low reliability; and a third state in which there is no transmission power control information having any reliability, respectively; and the power-control-algorithm-instruction unit may check the degree of reliability of the transmission power control information for each base station based on the radio state, sets which state of the first thru third states to the current state based on the reliability of the transmission power control information for each base station, and instructs the transmission power control unit to execute transmission power control according to the power-control algorithm that corresponds to the current state.
Moreover, in the transmission power control apparatus described above, the radio-state-monitoring unit may measure reception SIR of a base station using a signal received from that base station; and the power-control-algorithm-instruction unit may determine that reliability of the transmission power control information is high when the reception SIR is greater than a first threshold value, determines that reliability of the transmission power control information is low when the reception SIR is greater than a second threshold value but less than the first threshold value, determines that the transmission power control information has no reliability when the reception SIR is less than the second threshold value, and sets the current state to one of the first thru third states based on the judgment result.

According to an embodiment of the present invention, a plurality of power-control algorithms for controlling uplink transmission power are stored, the state (radio state) of the radio links between each base station and the mobile station is monitored, and the uplink transmission power of the mobile station is controlled based on a power-control algorithm that is specified according to the radio state, so it is possible to stably perform transmission power control even if the radio links are not stable. Particularly, according to this embodiment, the uplink transmission power of the mobile station is performed using a power-control algorithm that corresponds to the reliability of the transmission power control information for each base station, so it is possible to stably perform transmission power control even if the radio links are not stable.
Also, according to an embodiment of the present invention, the power-control algorithms are created so that the transmission power is kept somewhat large in a state in which the radio links are unstable, so in a state in which the radio links are not stable, it is possible to prevent the transmission power from decreasing and prevent communication from being cut off.
Other features and advantages of the present invention will be apparent from the following description taken in conjunction with the accompanying drawings.

### BRIEF DESCRIPTION OF THE DRAWINGS

FIG, 1 is a drawing showing the construction of a mobile station.
FIG. 2 is a drawing that shows in detail the overall construction of a baseband processing unit (inverse spreading unit, channel compensation/synchronization detection wave unit, RAKE combining unit, and demodulation unit) that corresponds to one base station.
FIG. 3 is a flowchart for a first transmission power control algorithm.
FIG. 4 is a flowchart for a second transmission power control algorithm.
FIG. 5 is a flowchart for a third transmission power control algorithm.
FIG. 6 is a flowchart for a transmission power control-algorithm-setting process.
FIG. 7 is a drawing for explaining an example of judging TPC information.
FIG. 8 is a drawing that shows the construction of a radio communication system.
FIG. 9 is a drawing for explaining the main radio channels that are used in HSDPA.
FIG. 10 is a drawing for explaining the slot format of a downlink DPCH.
FIG. 11 is a drawing for explaining transmission power control of a mobile station.
FIG. 12 is a drawing for explaining the condition when a mobile station performs communication simultaneously with three base stations during handover.
FIG. 13 is a flowchart for a previously-proposed transmission power control process during soft handover.

### DESCRIPTION OF THE PREFERRED EMBODIMENTS

### (A) Construction of a Mobile Station

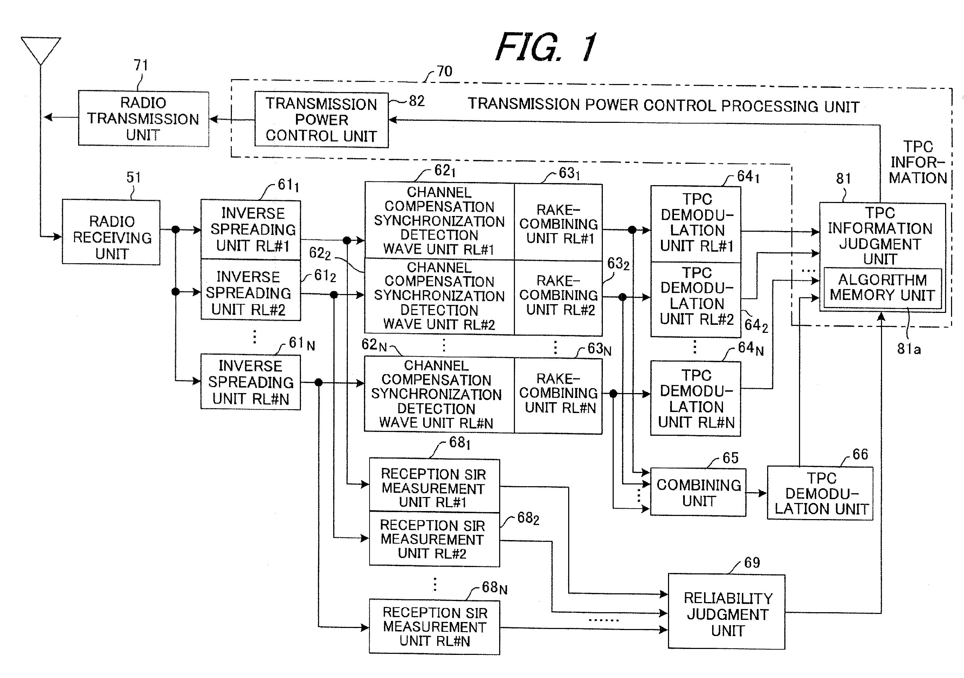

FIG. 1 is a drawing showing the construction of a mobile station. The mobile station is in a handover state, and is performing communication with a plurality of base stations via radio links.
A radio-receiving unit 51 converts the radio signals that were received from the plurality of base stations to baseband signals using a frequency-down-conversion process, then performs AD conversion and outputs the result.
There are inverse spreading units 61₁ to 61_{N}, channel compensation synchronization detection wave units 62₁ to 62_{N}, RAKE-combining units 63₁ to 63_{N} and demodulation units 64₁ to 64_{N} that correspond to each of the respective base stations. The inverse spreading units 61₁ to 61_{N} that correspond to each of the base stations multiply the respective baseband signals by a specified inverse spreading code that was specified from the base station and outputs pilot signals and information signals, then the channel compensation synchronization detection wave units 62, to 62_{N} use the pilot signals to estimate channels, and together with performing channel compensation based on the channel estimation results, returns the information signals to their original phase. The RAKE-combining units 63, to 63_{N} perform RAKE combination of information signals that are output for each path of the multiple paths between the base stations and the mobile station, and the demodulation units 64₁ to 64_{N} perform demodulation processing on the RAKE-combined signals to demodulate the information (TPC information), then output the results. The demodulation units 64₁ to 64_{N} will hereafter be called TPC demodulation units. A RAKE-combining unit 65 further combines the RAKE-combined signals that are output from each of the RAKE-combining units 63₁ to 63_{N}, and a TPC demodulation unit 66 demodulates the TPC information based on that combined signal.

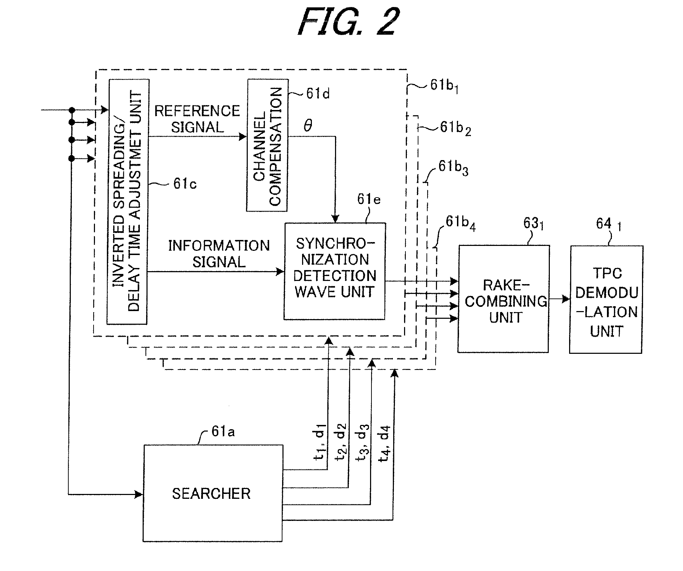

FIG. 2 is a drawing showing in detail the overall construction of a baseband processing unit (inverse spreading unit, channel compensation synchronization detection wave unit, RAKE-combining unit, demodulation unit) that corresponds to one base station. When a direct spread signal that has suffered a multi-path effect is input to a searcher 61a from the radio-receiving unit 51, the searcher 61a uses a matched filter to perform self-correlation computation and detects the multiple paths, and inputs timing data t, to t₄ and delay time adjustment data d, to d₄ for the start of the inverse spreading for each path to finger units 61b₁ to 61b₄. Each inverse spreading/delay time adjustment unit 61c of the respective finger units 61b₁ to 61b₄ performs inverse spreading processing on the direct wave or delay wave that arrives via the corresponding path at the respective timing t, to t₄, and integrates the results, after which it delays the respective integrated signal by a delay time d, to d₄ that corresponds to the path and outputs two kinds of signals, a pilot signal and information signal. A phase compensation unit (channel estimation unit) 61d outputs the phase difference *θ* between the pilot signal that was obtained from inverse spreading and an already known pi lot signal, and based on that phase difference *θ* , a synchronization detection wave unit 61e returns the information signal to its original phase. A RAKE-combining unit 63, combines the information signals that were output from each of the finger units 61b₁ to 61b₄, and a TPC demodulation unit 64₁ demodulates the TPC information based on the RAKE-combined signal.

Returning to FIG. 1, reception SIR measurement uni ts 68₁ to 68_{N} measure the state of the radio links between the mobile station and the respective corresponding base station, for example, they measure the reception signal quality or the SIR (reception SIR) of the received signals, and input the measurement results to a reliability judgment unit 69.
The reliability judgment unit 69 compares the reception SIR with a first and second threshold value, and based on the comparison results, determines the degree of reliability of the TPC information that is sent from each base station, and based on the judgment results, determines the algorithm to be used for transmission power control. As will be described later, there is (1) a first transmission power control algorithm that is used in a first state in which there is TPC information having high reliability, (2) a second transmission power control algorithm that is used in a second state in which there is no TPC information having high reliability, but there is TPC information having low reliability, and (3) a third transmission power control algorithm that is used in a third state in which none of the TPC information has reliability.
When the reception SIR of the signal received from a base station is greater than a first threshold value A, the reliability judgment unit 69 determines that the reliability of the TPC information is high, and when the reception SIR is greater than a second threshold value B but less than the first threshold value A (B < A), the reliability judgment unit 69 determines that the reliability of the TPC information is low, and when the reception SIR is less then the second threshold value B, the reliability judgment unit determines that the TPC information has no reliability. Also, based on the reliability of TPC information for each base station, the reliability judgment unit 69 determines which of the three states, (the first thru third states), the current state is, and sends an instruction to the transmission power control processing unit 70 to execute transmission power control according to the transmission power control algorithm that corresponds to the current state. The instruction includes algorithm identified data and the reliability judgment results of the TPC information sent from the base stations.

The transmission power control processing unit 70 increases (UP) or decreases (DOWN) the gain of the transmission power amplification unit of a radio-transmission unit 71 according to one of the first to third transmission power control algorithms. The transmission power control processing unit 70 comprises: a TPC information judgment unit 81 that determines whether the transmission power control processing unit 70 specifies that the TPC information is UP, or specifies that the TPC information is DOWN; and a transmission power control uni t 82 that increases (UP) or decreases (DOWN) the gain of the transmission power amplification unit of the radio-transmission un i 71 based on the judged TPC information.
The TPC information judgment unit 81 is a microcomputer and stores the first thru third transmission power control algorithms in an internal memory unit 81a, and according to the transmission power control algorithm that is identified by the algorithm identified data sent from the reliability judgment unit 69, determines whether the TPC information specifies to increase the gain (UP) or to decrease the gain (DOWN), and inputs the judged TPC information to the transmission power control unit 82.

### (B) Transmission power control Algorithm

### (a) First Transmission power control Algorithm

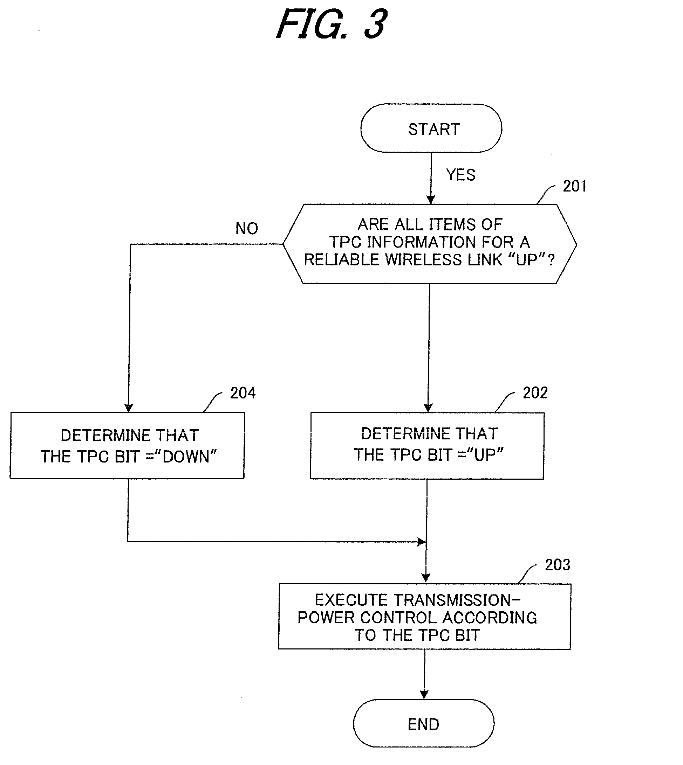

FIG. 3 is a flowchart for the first transmission power control algorithm, and is used in a first state in which there is TPC information having high reliability.
The TPC information judgment unit 81 checks whether all of the TPC information having high reliability specifies 'UP' (step 201), and when all specify 'UP' determines that the TPC information is 'UP' (step 202) and inputs [TPC information = UP] to the transmission power control unit 82. Based on that TPC information, the transmission power control unit 82 controls the transmission power amplification unit of the radio-transmission unit 71 and increments the transmission power of the upl ink DPCH by a specified amount (step 203).
On the other hand, in step 201, when there is even one item of TPC information that specifies 'DOWN', the TPC information judgment unit 81 determines that the TPC information is 'DOWN' (step 204) and inputs [TPC information = DOWN] to the transmission power control unit 82. Based on that TPC information, the transmission power control unit 82 controls the transmission power amplification unit of the radio-transmission unit 71 and decrements the transmission power of the uplink DPCH by a specified amount (step 203).
The first transmission power control algorithm is an algorithm that is used when there is a radio link having a good reception state, and by believing the TPC information from the radio link having high reliability is reliable (steps 201-202), it is possible to increase the probability that the TPC information will be judged correctly, and also by the steps 201 and 204 it is possible to prevent the transmission power of the mobile station from becoming larger than necessary.

### (b) Second Transmission power control Algorithm

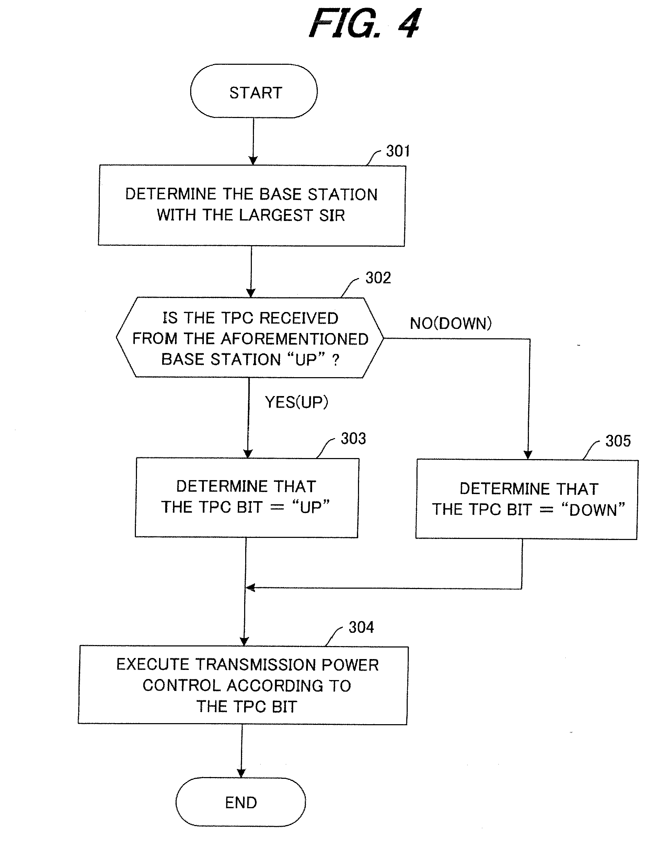

FIG. 4 is a flowchart for the second transmission power control algorithm, and it is used in the second state in which there is no TPC information having high reliability, but there is TPC information having low reliability.
The TPC information judgment unit 81 judges the radio link (base station) having the largest reception SIR (step 301), and checks whether the TPC information received from that base station specifies 'UP' (step 302), and when the TPC information specifies 'UP', determines the TPC information to be 'UP' (step 303) and inputs [TPC information = UP] to the transmission power control unit 82. Based on that TPC information, the transmission power control unit 82 controls the transmission power amplification unit of the radio-transmission unit 71, and increments the transmission power of the uplink DPCH a specified amount (step 304).
However, in step 302, when the TPC information specifies 'DOWN', the TPC information judgment unit 81 determines that the TPC information is 'DOWN' (step 305), and inputs [TPC information = DOWN] to the transmission power control unit 82. Based on that TPC information, the transmission power control unit 82 controls the transmission power amplification unit of the radio-transmission unit 71, and decrements the transmission power of the uplink DPCH by a specified amount (step 304).
The second transmission power control algorithm is used when there is no radio link having a good reception state, and by believing the radio link selected from among those links having the best reception state, it is possible to prevent the transmission power of the mobile station from dropping too much and the radio link becoming unstable.

### (c) Third Transmission power control Algorithm

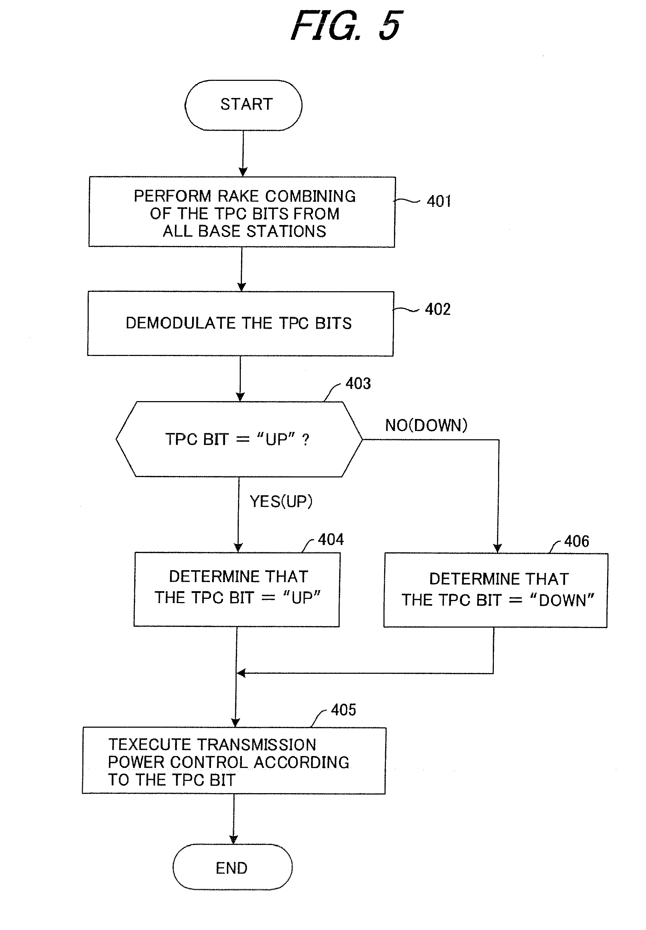

FIG. 5 is a flowchart of the third transmission power control algorithm, and is used in the third state in which none of the TPC information has any reliability.
The combining unit 65 performs RAKE combining of the TPC information signals received from all of the base stations (step 401), and based on the combined signal, the TPC demodulation unit 66 demodulates the TPC information (step 402). The TPC information judgment unit 81 checks whether the TPC information that is demodulated by the TPC demodulation unit 66 specifies 'UP' (step 403), and when the information specifies 'UP', the TPC information judgment unit 81 determines that the TPC information is 'UP' (step 404), and inputs [TPC information = UP] to the transmission power control unit 82. Based on that TPC information, the transmission power control unit 82 controls the transmission power amplification unit of the radio-transmission unit 71, and increments the transmission power of the uplink DPCH by a specified amount.
However, in step 403, when the TPC information specifies 'DOWN', the TPC information judgment unit 81 determines that the TPC information is 'DOWN' (step 406), and inputs [TPC information = DOWN] to the transmission power control unit 82. Based on that TPC information, the transmission power control unit 82 controls the transmission power amplification unit of the radio-transmission unit 71, and decrements the transmission power of the uplink DPCH by a specified amount (step 405).
The third transmission power control algorithm is used when the reception state is poor, and it performs RAKE combining of the TPC-information signals from all of the radio links, and demodulates the TPC information, and by using that TPC information, has the effect of stabilizing transmission power control.

### (C) Transmission power control Algorithm Decision Process

An embodiment of present invention performs reliability judgment of the TPC information received from different base stations for each radio link, and by performing TPC judgment using the reliability judgment results, increases the probability that the TPC information will be judged correctly. Also, by preparing a plurality of transmission power control algorithms and switching the algorithm according to the radio state, it increases the stability of the radio link.
Based on the quality (for example, reception SIR) of the signals received by way of radio links from each base station to the mobile station, the reliability judgment unit 69 performs reliability judgment of the TPC information received from those radio links. Reliability judgment is performed by comparing the reception SIR of each radio link with predetermined first and second threshold values A, B. The radio link, having a reception SIR that is greater than the first threshold value A, is determined to be a radio link having high reliability, and by believing the TPC information from a radio link having high reliability, the probability of judging the TPC information correctly is increased.

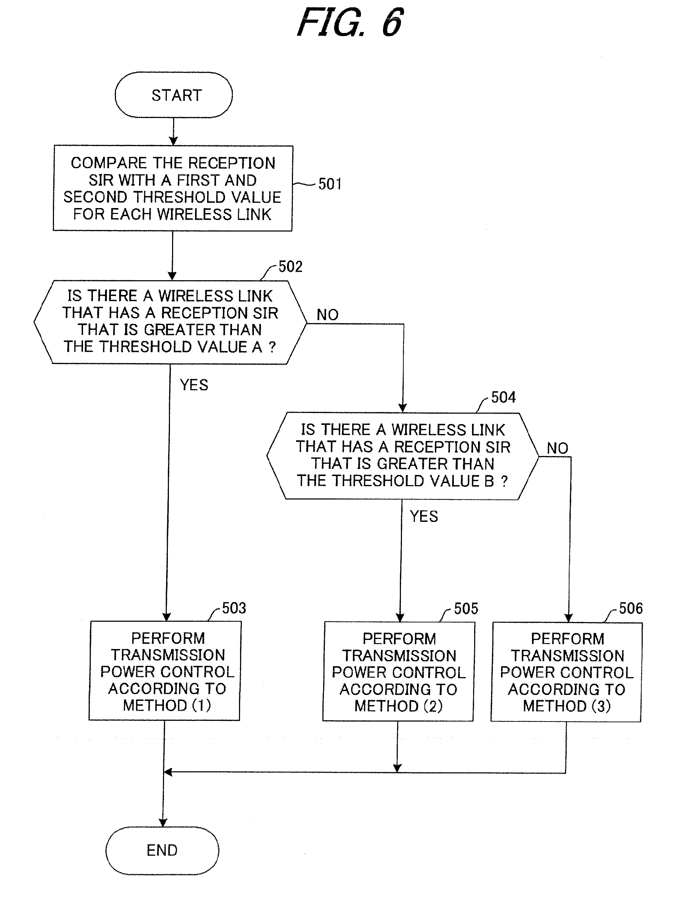

FIG. 6 is a flowchart for the transmission power control algorithm decision process.
Reception SIR for each radio link is input to the reliability judgment unit 69, and the reliability judgment unit 69 compares each reception SIR with first and second threshold values A, B, then based on the comparison result, determines whether the reliability of the TPC information that is received from each base station is high, low or no reliability (step 501).
Next, the reliability judgment unit 69 checks whether there is a radio link whose reception SIR is greater than the threshold value A, or in other words, whether there is a radio link whose TPC information reliability is high (step 502). When there is a radio link whose reliability is high, the reliability judgment unit 69 sends algorithm identified data and instructs the TPC information judgment unit 81 to perform transmission power control according to the first transmission power control algorithm, as well as notifies it of the radio link (base station) whose reception SIR is greater than threshold value A (step 503). From doing this, the TPC information judgment unit 81 performs transmission power control according to the first transmission power control algorithm. Thereby it is possible to increase the probability that the TPC information will be judged correctly increases, and it is possible to prevent having the transmission power of the mobile station from becoming larger than necessary.

In step 502, when there is no radio link whose reception SIR is greater than threshold value A, the reliability judgment unit 69 checks whether there is a radio link whose reception SIR is greater than threshold value B, or in other words, checks whether there is a radio link whose TPC information reliability is low (step 504). When there is a radio link whose reliability is low, the reliability judgment unit 69 sends algorithm identified data and instructs the TPC information judgment unit 81 to perform transmission power control according to the second transmission power control algorithm, as well as notifies it of the radio link (base station) having the largest reception SIR (step 505). From doing this, the TPC information judgment unit 81 performs transmission power control according to the second transmission power control algorithm. Thereby it is possible to prevent the transmission power of the mobile station dropping too much and the radio link becoming unstable.
In step 504, when there is no radio link whose reception SIR is greater than threshold value B, or in other words, when all of the reception SIR are less than threshold value B, there is no TPC information having any reliability, so the reliability judgment unit 69 instructs the TPC information judgment unit 81 to perform transmission power control according to the third transmission power control algorithm (step 506). From doing this, the TPC information judgment unit 81 performs transmission power control according to the third transmission power control algorithm. The TPC information judgment unit 81 performs RAKE combining of the TPC information signals from all of the radio links and demodulates the TPC information, and by using that TPC information, the probability that power control can be performed correctly increases, and transmission power control is stabilized.

The threshold values A, B, which are the reference criteria for switching the algorithms of this invention, are decided so that communication can be performed stably during HSDPA communication, and so that the transmission power of the mobile station does not become larger than necessary.
When the threshold value is too large, the reliability of a radio ink becomes low, and as a result, the probability of performing TPC information judgment using the second and third algorithm becomes high. This means that there is a possibility that the transmission power of the mobile station will become high, that power interfering with other users (mobile stations) will increase, and the radio quality of the overall communication area will become poor. On the other hand, when the threshold value is too small, the reliability of a radio link becomes high, and as a result, the probability of performing TPC information judgment using the first algorithm becomes high. This is the same as the prior TPC information judgment method, and since the probability of determining that the TPC information is 'DOWN' becomes high, and the transmission power of the mobile station tends to become lower, the possibility of communication being cut off increases.

### (D) Example of TPC information judgment

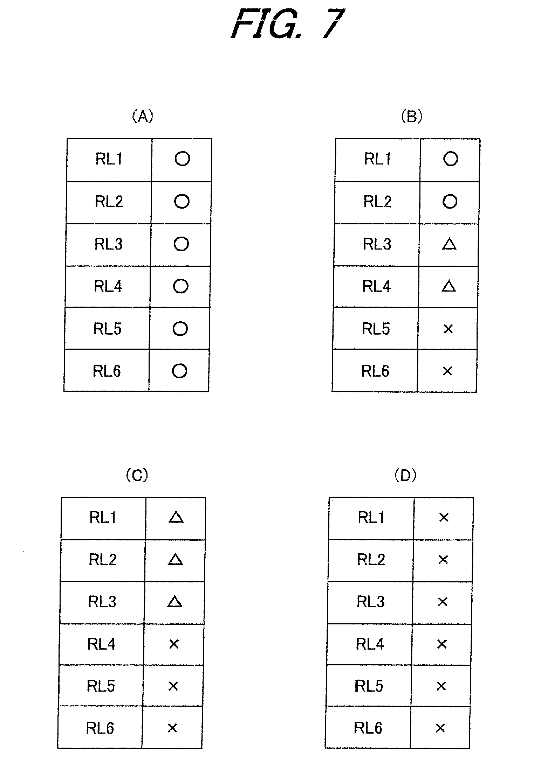

An example of judging TPC information is explained hereinafter.
The reception SIR for each radio link is compared with threshold value A and threshold value B (where, threshold value B < threshold value A), and the comparison results are given in FIG. 7 in which:
O: Reception SIR > threshold value A (radio link with high reliability)
Δ : Threshold value A > reception SIR > threshold value B (radio link with low reliability)
X: Threshold value B > reception SIR (radio link with no reliability)

### (a) Judgment Example 1

As shown in (A) FIG. 7, when the reliability of all of the radio links RL1 to RL6 is high, then all radio links have reliability. Therefore, the first transmission power control algorithm is used, and when the TPC information of all of the radio links RL1 to RL6 indicate 'UP', the TPC information is determined to be 'UP', however, when even one of the TPC information is 'DOWN', the TPC information is determined to be 'DOWN'.

### (b) Judgment Example 2

In the case of the reliability judgment results for radio links RL1 to RL6 shown in (B) of FIG. 7, the first transmission power control algorithm is used for radio links RL1, RL2 whose reception SIR values are greater than threshold value A. When the TPC information for both radio links RL1, RL2 indicate 'UP', the TPC information is determined to be 'UP', however, when either TPC information indicates 'DOWN', the TPC information is determined to be 'DOWN'.

### (c) Judgment Example 3

In the case of the reliability judgment results for radio links RL1 to RL6 shown in (C) of FIG. 7, the second transmission power control algorithm is performed for radio links RL1, RL2 and RL3 whose reception SIR values are greater than threshold value B. The TPC information is judged according to the TPC information of the radio link having the largest reception SIR value among the radio links RL1, RL2 and RL3. When the reception SIR values are RL1 > RL2 > RL3, and when the TPC information of radio link RL1 indicates 'UP', the TPC information is determined to be 'UP', when the TPC information of radio link RL1 indicates 'DOWN', the TPC information is determined to be 'DOWN'.

### (d) Judgment Example 4

In the case of the reliability judgment results for radio links RL1 to RL6 shown in (D) of FIG. 7, the third transmission power control algorithm is used since there no radio links having any reliability. RAKE combining (soft decision combining) is performed for the TPC information of all of the radio links RL1 to RL6, and when the result (hard decision output) indicates 'UP', the TPC information is determined to be 'UP', and when the result indicates 'DOWN', the TPC information is determined to be 'DOWN'.

According to an embodiment of the invention described above, it is possible to perform transmission power control stably even when the radio links have no reliability, which makes it possible to stabilize the communication quality. More specifically speaking, according to an embodiment of the present invention, by using the second or third algorithm when the reliability of the radio links is low, or when there is no reliability, the TPC information of a plurality of radio links are processed fairly, so it is possible to increase the transmission power of the mobile station, and thus lower the possibility that communication will be cut off.
As many apparently widely different embodiments of the present invention can be made wi thout departing from the spirit and scope thereof, it is to be understood that the invention is not limited to the specific embodiments thereof except as defined in the appended claims.

## Claims

1. A transmission power control method for a mobile station that controls the transmission power of the uplink using transmission power control information that is sent from a plurality of base stations with which the mobile station is communicating, comprising:
a first step of storing a plurality of power-control algorithms for controlling the uplink transmission power using said transmission power control information;
a second step of monitoring radio state between each base station and the mobile station; and
a third step of controlling the uplink transmission power of the mobile station based on one of said plurality of power-control algorithms according to the radio state.

2. The transmission power control method of claim 1, wherein
in said first step,
said power-control algorithms are created and saved so that they correspond to a first state in which there is transmission power control information having high reliability; a second state in which there is no transmission power control information having high reliability, but there is transmission power control information having low reliability; and a third state in which there is no transmission power control information having any reliability, respectively;
in said second step,
the degree of reliability of the transmission power control information is checked for each base station based on said radio state, and the current state is set to one of said first thru third states based on the reliability of the transmission power control information for each base station; and
in said third step,
the uplink transmission power of the mobile station is controlled using a power-control algorithm according to said set state.

3. The transmission power control method af claim 2, wherein
said second step comprises:
a step of measuring reception SIR of a base station using a signal received from that base station;
a step of determining that reliability of the transmission power control information is high when the reception SIR is greater than a first threshold value, determining that reliability of the transmission power control information is low when the reception SIR is greater than a second threshold value but less than the first threshold value, and determining that the transmission power control information has no reliability when the reception SIR is less than the second threshold value; and
a step of setting the current state to one of said first thru third states based on the reliability of the transmission power control information for each base station.

4. The transmission power control method of claim 2 or claim 3, wherein
the power-control algorithm that corresponds to said first state comprises:
a step of checking whether all of the transmission power control information having high reliability specifies 'power UP'; and
a step of increasing the transmission power by a specified amount when all of the transmission power control information specifies 'power UP', and decreasing the transmission power by a specified amount even when only one item of the transmission power control information specifies 'power DOWN';
the power-control algorithm that corresponds to said second state comprises:
a step of determining the base station having the largest reception SIR; and
a step of increasing the transmission power by a specified amount when the transmission power control information that is sent from that base station specifies 'power UP', and decreasing the transmission power by a specified amount when that transmission power control information specifies 'power DOWN' ; and
the power-control algorithm that corresponds to said third state comprises:
a step of performing RAKE combining of signals received from all base stations, and demodulating the transmission power control information based on the RAKE combination result; and
a step of increasing the transmission power by a specified amount when that demodulated transmission power control information specifies 'power UP', and decreasing the transmission power by a specified amount when that transmission power control information specifies 'power DOWN'.

5. A transmission power control apparatus for a mobile station that controls the transmission power of the uplink using transmission power control information that is sent from a plurality of base stations with which the mobile station is communicating, comprising:
a radio-state-monitoring unit that monitors the radio states between each base station and the mobile station;
a transmission power control unit that stores a plurality of power-control algorithms for controlling uplink transmission power using said transmission power control information, and controls the uplink transmission power of the mobile station based on one of said plurality of power-control algorithms; and
a power-control-algorithm-instruction unit that, based on said radio state, instructs said transmission power control unit which power-control algorithm should be used to execute transmission power control.

6. The transmission power control apparatus of claim 5, wherein
said transmission power control unit stores power-control algorithms that correspond to a first state in which there is transmission power control information having high reliability; a second state in which there is no transmission power control information having high reliability, but there is transmission power control information having low reliability; and a third state in which there is no transmission power control information having any reliability, respectively; and
said power-control-algorithm-instruction unit checks the degree of reliability of the transmission power control information for each base station based on said radio state, sets which state of said first thru third states to the current state based on the reliability of the transmission power control information for each base station, and instructs said transmission power control unit to execute transmission power control according to the power-control algorithm that corresponds to the current state.

7. The transmission power control apparatus of claim 6, wherein
said radio-state-monitoring unit measures reception SIR of a base station using a signal received from that base station; and
said power-control-algorithm-instruction unit determines that reliability of the transmission power control information is high when the reception SIR is greater than a first threshold value, determines that reliability of the transmission power control information is low when the reception SIR is greater than a second threshold value but less than the first threshold value, determines that the transmission power control information has no reliability when the reception SIR is less than the second threshold value, and sets the current state to one of said first thru third states based on the judgment result.

8. The transmission power control apparatus of claim 6 or claim 7, further comprising:
a RAKE-combining unit that performs RAKE combining of signals received via multi paths for each base station;
a demodulation unit that demodulates the transmission power control information based on the combined signal that is output from each RAKE-combining unit;
a combining unit that combines the RAKE-combination results for all base stations; and
a demodulation unit that demodulates the transmission power control information based on the combined signal that is output from the combining unit; wherein
said transmission power control unit
in said first state, increases the transmission power by a specified amount when all of the transmission power control information having high reliability specifies 'power UP', and decrease the transmission power by a specified amount when even one item of transmission power control information having high reliability specifies 'power DOWN';
in said second state, increases the transmission power by a specified amount when the transmission power control information that is send from the base station having the largest reception SIR specifies 'power UP', and decreases the transmission power by a specified amount when that transmission power control information specifies 'power DOWN'; and
in said third state, performs RAKE combining of signals received from each base station, and increases the transmission power by a specified amount when the transmission power control information that is demodulated based on the RAKE combination result specifies 'power UP', and decreases the transmission power by a specified amount when that transmission power control information specifies 'power DOWN'.
